(19) Europäisches Patentamt
European Patent Office
Office européen des brevets

(11) **EP 0 929 409 B1**

(12) **EUROPÄISCHE PATENTSCHRIFT**

(45) Veröffentlichungstag und Bekanntmachung des Hinweises auf die Patenterteilung:
**05.03.2003 Patentblatt 2003/10**

(21) Anmeldenummer: **98940056.9**

(22) Anmeldetag: **26.06.1998**

(51) Int Cl.⁷: **F16H 61/00**, F16H 9/18

(86) Internationale Anmeldenummer:
**PCT/DE98/01756**

(87) Internationale Veröffentlichungsnummer:
**WO 99/007572 (18.02.1999 Gazette 1999/07)**

(54) **VORRICHTUNG UND VERFAHREN ZUR ÜBERSETZUNGSVERSTELLUNG BEI EINEM CVT**

DEVICE AND METHOD FOR ADJUSTING THE RATIO OF TRANSMISSION IN A CVT

DISPOSITIF ET PROCEDE DE REGLAGE DU RAPPORT DE TRANSMISSION DANS UNE TRANSMISSION A RAPPORTS VARIABLES EN CONTINU

(84) Benannte Vertragsstaaten:
**BE DE FR IT**

(30) Priorität: **06.08.1997 DE 19733960**

(43) Veröffentlichungstag der Anmeldung:
**21.07.1999 Patentblatt 1999/29**

(73) Patentinhaber: **ROBERT BOSCH GMBH**
**70442 Stuttgart (DE)**

(72) Erfinder: **LUH, Joachim**
**D-74321 Bietigheim-Bissigen (DE)**

(56) Entgegenhaltungen:
| | |
|---|---|
| **EP-A- 0 118 922** | **EP-A- 0 210 663** |
| **DE-A- 4 411 628** | **FR-A- 2 340 487** |
| **US-A- 4 590 561** | **US-A- 4 597 308** |
| **US-A- 5 257 960** | **US-A- 5 600 557** |

## Beschreibung

Stand der Technik

Die Erfindung geht aus von einer Vorrichtung bzw. einem Verfahren zur automatischen Verstellung der Übersetzung eines kontinuierlich verstellbaren Getriebes mit den Merkmalen der Oberbegriffe der unabhängigen Ansprüche.

Kontinuierlich verstellbare Fahrzeuggetriebe sind beispielsweise bekannt aus der EP,A1,0 451 887. Hierbei werden zur Einstellung beziehungsweise Verstellung der Getriebeübersetzung die Drehzahlen der Antriebsseite (Primärseite) und der Abtriebsseite (Sekundärseite) mit Hilfe von zwei Drehzahlsensoren gemessen. Aus diesen Sensorsignalen wird die einzustellende beziehungsweise eingestellte Übersetzung bestimmt.

Aus der DE,A1,44 11 628 ist ein in seiner Übersetzung stufenlos verstellbares Umschlingungsgetriebe mit einer Antriebs- und eine Abtriebsseite bekannt. Die Antriebs- bzw. die Abtriebsseite weisen dabei wenigstens ein axial verschiebbares Element auf, das im wesentlichen die Form einer Kegelscheibe besitzt. Das Umschlingungsteil ist dabei im allgemeinen als ein Band, vorzugsweise ein Schubgliederband, oder ein Riemen oder eine Kette zwischen Scheibenpaaren, die die Antriebs- und die Abtriebsseite darstellen, eingespannt.

Zur Regelung des Schlupfes des Umschlingungsteils werden dabei die axiale Verschiebung wenigstens eines der axial verschiebbaren Elemente sowie die Drehzahlen der Antriebs- und die Abtriebsseite erfaßt. Für die Drehzahlerfassung einer der beiden Seiten sowie für die Erfassung der axialen Verschiebung auf dieser Seite wird dabei das Ausgangssignal eines einzigen Sensors ausgewertet.

Die gattungsbildende EP 0 118 922 A2 zeigt ein kontinuierlich verstellbares Getriebe, bei dem die axiale Verschiebung der Abtriebsseite gemessen wird. Während des Stillstandes des Fahrzeugs wird die Übersetzung abhängig von dieser axiale Verschiebung eingestellt.

Die Aufgabe der vorliegenden Erfindung besteht darin, in einfacher und kostengünstiger Weise die Übersetzung eines stufenlosen Getriebes in allen Betriebsbereichen möglichst exakt zu verstellen.

Diese Aufgabe wird durch die kennzeichnenden Merkmale der unabhängigen Ansprüche gelöst.

Vorteile der Erfindung

Wie schon erwähnt geht die Erfindung aus von einer Vorrichtung beziehungsweise einem Verfahren zur Verstellung der Übersetzung eines in seiner Übersetzung stufenlos verstellbaren Umschlingungsgetriebes, mit einer Antriebs- und einer Abtriebsseite. Die Antriebs- und Abtriebsseite weisen dabei wenigstens ein axial verschiebbares Element auf, das im wesentlichen die Form einer Kegelscheibe besitzt. Durch Sensormittel wird zum einen ein die Drehbewegung der Antriebsseite oder der Abtriebsseite repräsentierendes Drehzahlsignal und zum anderen ein die axiale Verschiebung wenigstens eines der axial verschiebbaren Elemente repräsentierendes Verschiebungssignal erfaßt. Weiterhin sind Mittel zur Verstellung der Übersetzung vorgesehen, mittels der die Verstellung wenigstens abhängig von dem erfaßten Verschiebungssignal geschieht.

Zur vorteilhaften Anpassung beziehungsweise zur Adaption an Einbau-, Fertigungs- und/oder Alterungstoleranzen der Sensormittel ist erfindungsgemäß zur Verstellung der Übersetzung vorgesehen, daß abhängig von einem bei Vorliegen eines vorgebbaren Zustands des Getriebes erfaßten Verschiebungssignal ein Korrekturwert ermittelt wird. Das erfaßte Verschiebungssignal und/oder die aus dem erfaßten Verschiebungssignal abgeleiteten Größen werden dann abhängig von dem ermittelten Korrekturwert modifiziert.

Der zur obenbeschriebenen Adaption benötigte vorgebbare Zustand kann dann als vorliegend erkannt werden, wenn erfaßt wird, daß das Getriebe seine maximale oder minimale Übersetzung einnimmt. Hierbei ist insbesondere vorgesehen, daß

- zur hydraulischen Verschiebung der axial verschiebbaren Element wenigstens ein Ventil betätigt wird und die Erfassung der maximalen oder minimalen Übersetzung abhängig von der Betätigung des wenigstens einen Ventils und/oder abhängig von dem erfaßten Hydraulikdruck geschieht, und/oder

- die Erfassung der maximalen oder minimalen Übersetzung abhängig von der zeitlichen Änderung des erfaßten Verschiebungssignals geschieht, und/oder

- die Erfassung der maximalen oder minimalen Übersetzung abhängig von der erfaßten Stellung des vom Fahrer betätigbaren Fahrpedals geschieht.

In einer besonders vorteilhaften ersten Ausgestaltung der Erfindung ist vorgesehen, daß die Mittel zur Verstellung der Übersetzung derart ausgebildet sind, daß die Verstellung abhängig von dem erfaßten Drehzahlsignal, das die Drehbewegung der Antriebsseite repräsentiert, und abhängig von dem erfaßtem Verschiebungssignal, das die axiale Verschiebung eines der auf der Antriebseite angeordneten axial verschiebbaren Elemente repräsentiert, geschieht. Hierbei kann insbesondere vorgesehen sein, daß die Verstellung der Übersetzung ohne Berücksichtigung einer sensorisch direkt erfaßten Drehbewegung der Abtriebsseite geschieht. Bei dieser Ausgestaltung wird also zur Verstellung der Übersetzung die axiale Verschiebung und die Antriebsdrehzahl herangezogen. Im Vergleich mit der Übersetzungsverstellung, die auch die Abtriebsdrehzahl berücksichtigt, wird hierdurch vorteilhafterweise die Übersetzungseinstellung bei geringen Fahrzeuglängsgeschwindigkeit genauer, da in diesem Betriebsbereich die Antriebsdrehzahl im allgemeinen größer ist als die Abtriebsdrehzahl.

Ein Vorteil dieses Ausgestaltung besteht darin, daß hierdurch die Möglichkeit gegeben wird, einen Drehzahlsensor einzusparen. Darüber hinaus ist, wie noch im Laufe der Beschreibung genauer gezeigt werden wird, die gesamte Übersetzungseinstellung weitestgehend unabhängig von der Motorlast beziehungsweise von dem im Antriebsstrang wirkenden Antriebsmoment.

Bei dieser ersten Ausgestaltung kann vorgesehen sein, daß abhängig von dem erfaßten Drehzahlsignal, das die Drehbewegung der Antriebsseite repräsentiert, und dem erfaßten Verschiebungssignal, das die axiale Verschiebung eines der auf der Antriebseite angeordneten axial verschiebbaren Elemente repräsentiert, die Drehbewegung der Abtriebseite und/oder die aktuelle Getriebeübersetzung ermittelt wird.

Alternativ hierzu kann als zweite Ausgestaltung vorgesehen sein, daß die Verstellung der Übersetzung abhängig von dem erfaßten Drehzahlsignal, das die Drehbewegung der Abtriebsseite repräsentiert, und abhängig von dem erfaßten Verschiebungssignal, das die axiale Verschiebung eines der auf der Abtriebseite angeordneten axial verschiebbaren Elemente repräsentiert, geschieht. Hierbei kann insbesondere vorgesehen sein, daß die Verstellung der Übersetzung ohne Berücksichtigung einer sensorisch direkt erfaßten Drehbewegung der Antriebsseite geschieht.

Bei dieser zweiten Ausgestaltung kann vorgesehen sein, daß abhängig von dem erfaßten Drehzahlsignal, das die Drehbewegung der Abtriebsseite repräsentiert, und dem erfaßten Verschiebungssignal, das die axiale Verschiebung eines der auf der Abtriebseite angeordneten axial verschiebbaren Elemente repräsentiert, die Drehbewegung der Artriebseite und/oder die aktuelle Getriebeüersetzung ermittelt wird.

In einer besonders vorteilhaften Ausgestaltung ist vorgesehen, daß die Sensormittel derart ausgelegt sind, daß zur Erfassung der Drehbewegung und zur Erfassung der axialen Verschiebung das Ausgangssignal eines einzigen Sensors ausgewertet wird.

Weiterhin ist vorteilhafterweise vorgesehen, daß die Mittel zur Verstellung der Übersetzung derart ausgebildet sind, daß die Verstellung der Übersetzung durch eine Regelung der Verschiebung der axial verschiebbaren Elemente auf einen ermittelten Sollwert geschieht, wobei insbesondere vorgesehen ist, daß der Sollwert abhängig von dem erfaßten Verschiebungssicnal und abhängig von der erfaßten Drehbewegung ermittelt wird. Dies Ausgestaltung hat den Vorteil, daß die Schwingungsamplitude des Stellsignals für die Übersetzungsverstellung deutlich reduziert wird.

Besonders vorteilhaft ist es, wenn die Verstellung der Übersetzung durch eine Regelung der Verschiebung der axial verschiebbaren Elemente auf einen ermittelten Sollwert geschieht, wobei

- aus dem erfaßten Verschiebungssignal der Antriebsseite und dem erfaßten Drehzahlsignal der Antriebsseite die Drehbewegung der Abtriebsseite ermittelt wird,
- aus dem erfaßten Drehzahlsignal der Antriebsseite, der ermittelten Drehbewegung der Abtriebsseite und der erfaßten Stellung des vom Fahrer betätigbaren Fahrpedals ein Sollwert für die Drehbewegung der Antriebsseite gebildet wird und
- abhängig von dem ermittelten Sollwert für die Drehbewegung der Antriebsseite und dem erfaßten Drehzahlsignal der Antriebsseite ein Sollwert für die Verschiebung der axial verschiebbaren Elemente

ermittelt wird.

Weitere Ausgestaltungen sind den Unteransprüchen zu entnehmen.

Zeichnung

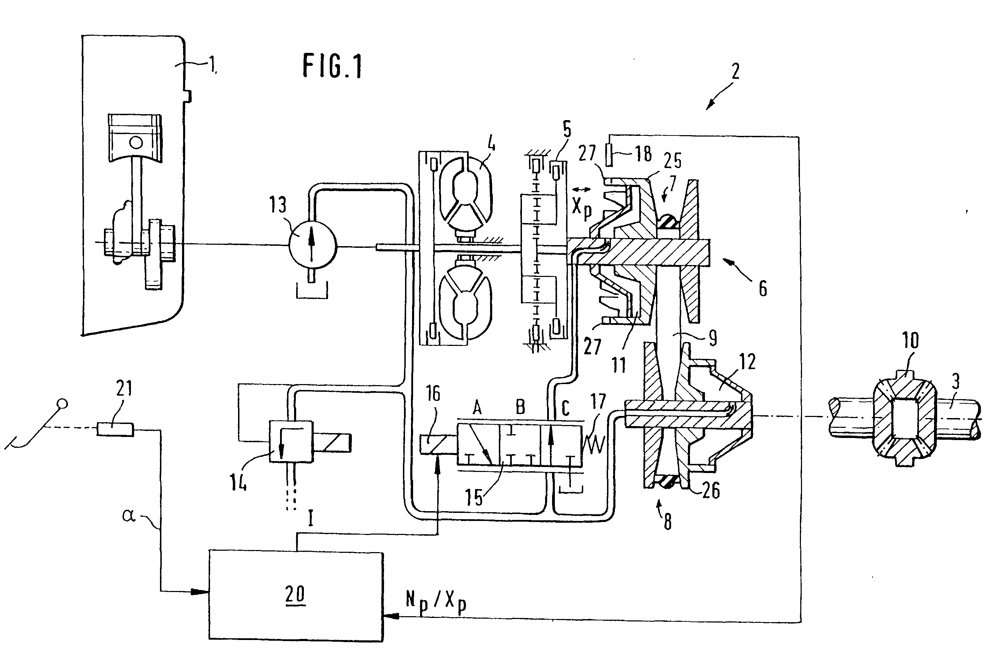

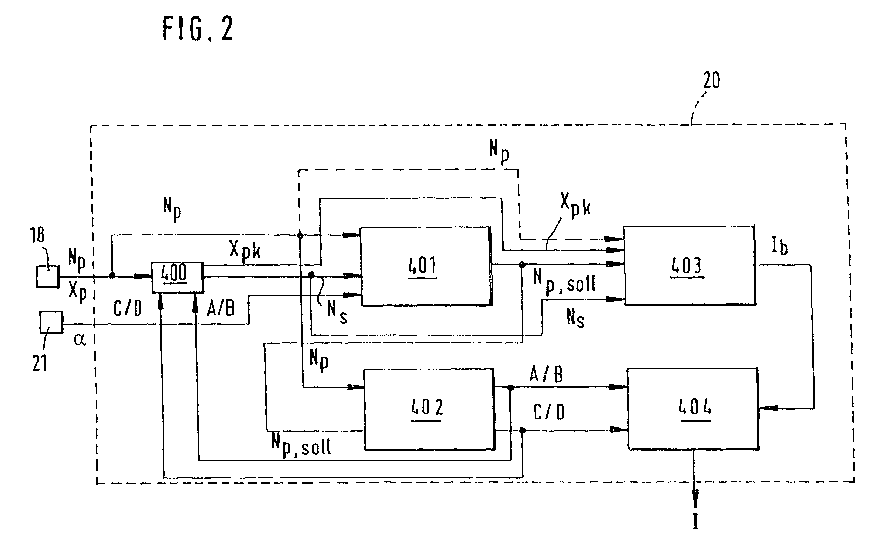

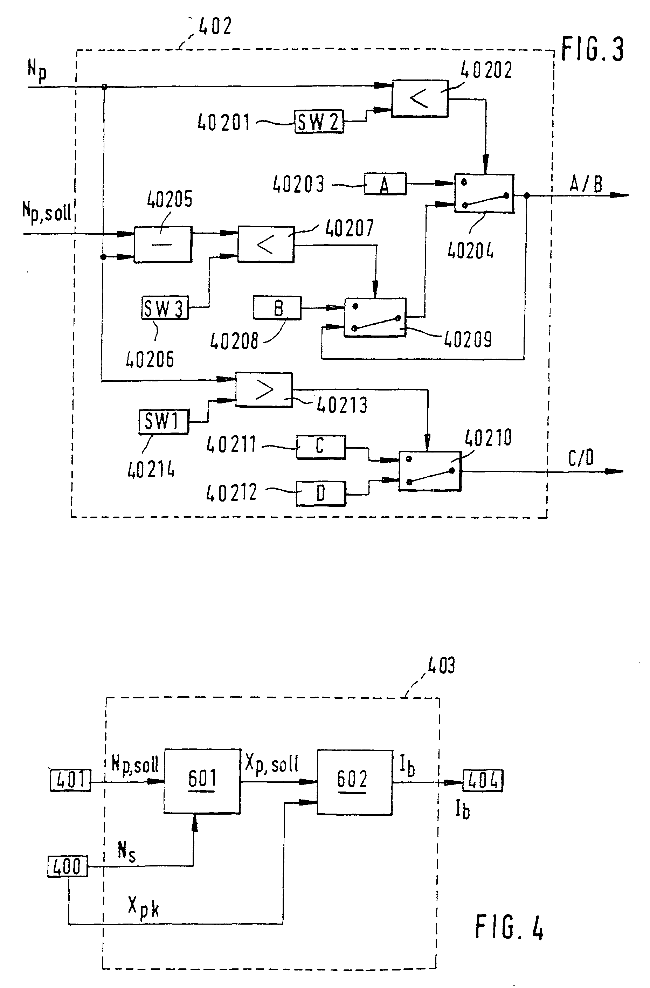

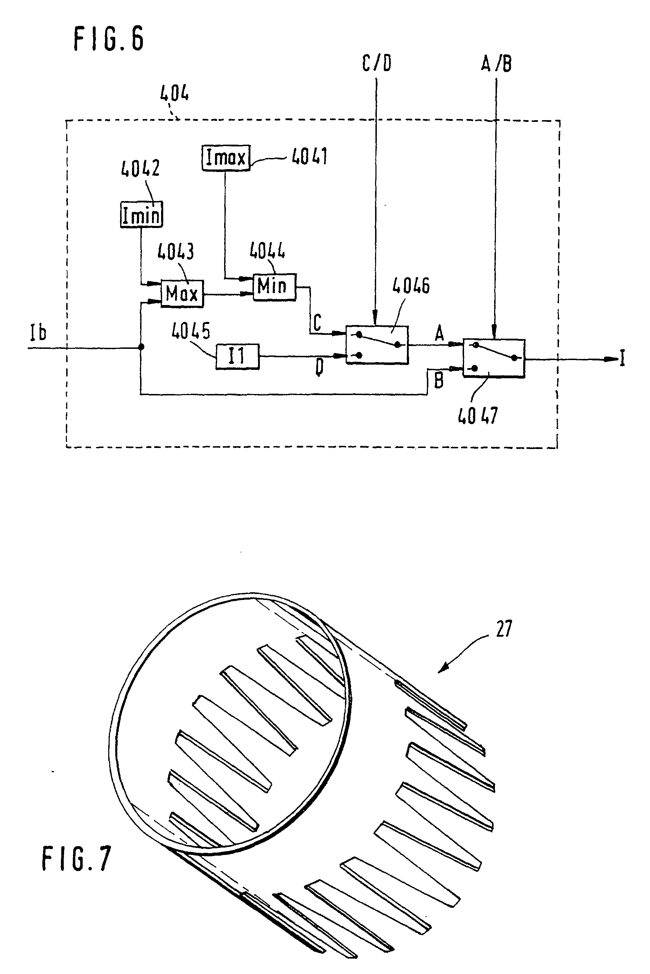

Die Figur 1 zeigt ein Übersichtsbild eines kontinuierlich verstellbaren Getriebes, während die Figur 2 ein Blockschaltbild der erfindungsgemäßen Getriebesteuerung darstellt. Die Figuren 3, 4, 5 und 6 zeigen anhand von Blockschaltbildern einzelne Teile der in der Figur 2 gezeigten Getriebesteuerung. Die Figur 7 stellt einen Teil des Kombinationssensors zur Erfassung der Drehzahl und der axialen Verschiebung dar.

Ausführungsbeispiele

Die Erfindung soll im folgenden anhand von Ausführungsbeispielen näher erläutert werden. In der Figur 1 ist dabei mit dem Bezugszeichen 2 ein stufenloses Umschlingungsgetriebe in Kraftfahrzeugen zum Zweck der Kraftübertragung vom Motor 1 zu den Antriebswellen 3 der Räder dargestellt. Ein solches stufenloses Getriebe hat beispielsweise einen Drehmomentwandler 4 und Kupplungen 5 für Vorwärts- und Rückwärtsfahrtumschaltungen, die zwischen dem Motor 1 und dem Variator 6 angeordnet sind. Der Variator 6 besteht aus einem antriebs-(primären) und einem abtriebsseitigen (sekundären) Kegelscheibensatz 7 und 8 mit den axial verschiebbaren Kegelscheiben 25 und 26, wobei mit Hilfe einer Kette oder eines Schubgliederbandes 9 die Kraft von dem Antriebs- 7 zum Abtriebsscheibensatz 8 übertragen wird. Jeder Kegelscheibensatz besteht aus einer axial feststehenden und einer axialbeweglichen Scheibe. Durch gleichzeitige Variation der axial beweglichen Scheiben auf dem Antriebs- und dem Abtriebsscheibensatz ändert sich die Übersetzung des Variators 6 von einer hohen Anfahrübersetzung Low zu einer niedrigen Übersetzung Overdrive.

Der Abtriebsscheibensatz ist über ein Ausgleichsgetriebe 10 mit den Antriebswellen 3 der Räder verbunden. Die axial beweglichen Kegelscheiben 25 und 26 sind hydraulisch verstellbar und besitzen dazu die Ölkammern 11 und 12.

Zur Druckölversorgung besitzt das Getriebe eine Ölpumpe 13, die beispielsweise mit der Drehzahl des Verbrennungsmotors 1 läuft. In einer möglichen Ausführungsform wird die Spannung des Bandes 9 mit Hilfe eines Druckbegrenzungsventils 14 eingestellt, welches den Druck in der abtriebsseitigen Ölkammer 12 reguliert. Die Getriebeübersetzung wird mit Hilfe eines Proportionalventils (Primärventil) 15 an der Primärseite eingestellt.

Dieses Primärventil 15 kann in der Stellung A Öl aus der antriebsseitigen Ölkammer 11 ablassen und somit den Druck vermindern, wodurch sich die Übersetzung nach Low verstellt. In der Stellung C fließt Öl in die antriebsseitige Ölkammer 11, wodurch sich die Übersetzung in Richtung Overdrive verändert und der Druck in der antriebsseitigen Ölkammer 11 ansteigt. In der Stellung B des Proportionalventils 15 ist die Ölkammer 11 abgedichtet, d. h. es kann nahezu kein Öl aus der Ölkammer 11 zu- oder abfließen. Das Proportionalventil 15 kann beispielsweise direktgesteuert sein oder durch ein Vorsteuerventil in bekannter Weise angesteuert werden.

In dem hier beschriebenen Ausführungsbeispiel wird durch Einstellen eines Stromes I in dem Magneten 16 eine Kraft auf den Ventilschieber erzeugt. Durch die am Ventilschieber vorhandene Feder 17 stellt sich eine bestimmte Stellung des Proportionalventils 15 ein. Das bedeutet, daß der Strom I durch den Magneten 16 die Stellung des Proportionalventils 15 und damit den Öffnungsquerschnitt des Ventils bestimmt.

Weiterhin existiert ein Drehzahlgeber 18, der die Primärdrehzahl $N_p$ und gleichzeitig die axiale Verschiebung $X_p$ der beweglichen Kegelscheibe 25 erfaßt. Hierzu ist ein Geberrad 27 mit der axial verschiebbaren primärseitigen Kegelscheibe 25 verbunden. Das Geberrad 27 hat ein spezielles Zahnprofil, beispielsweise in Form eines Sägezahnmusters, so daß sich bei einer axialen Verschiebung der beweglichen Kegelscheibe die Pulsweitendauer des von dem Drehzahlgeber 18 erfaßten Drehzahlsignals ändert. Die Figur 7 zeigt beispielhaft solch ein Geberrad, das als Hülse mit Sägezahnprofil ausgeführt ist. Zur Beschreibung des Kombinationssensors sei auch auf die eingangs erwähnte DE, A1,44 11 628 verwiesen.

Die Periodendauer des durch den an sich bekannten Sensor 18 erfaßten Drehzahlsignals ist ein Maß für die Drehzahl $N_p$ der Primärscheibe 25. Das Pulsweitenverhältnis gibt Aufschluß über die axiale Verschiebung $X_p$ der Primärscheibe 25. In der Anfahrübersetzung ergibt sich beispielsweise ein Pulsweitenverhältnis von 25%, in der Overdrive-Übersetzung ein Pulsweitenverhältnis von 75%.

Das Primär- bzw. das axiale Verschiebungssignal Np/Xp wird einem Getriebesteuergerät 20 zugeführt, welches den Strom I durch den Magneten 16 des Proportionalventils 15 einstellt. Weiterhin ist beispielsweise ein Sensor 21 zur Ermittlung der Stellung α des vom Fahrer betätigbaren Fahrpedals angeschlossen. Die Figur 2 zeigt die nähere Ausgestaltung des Steuergeräts 20.

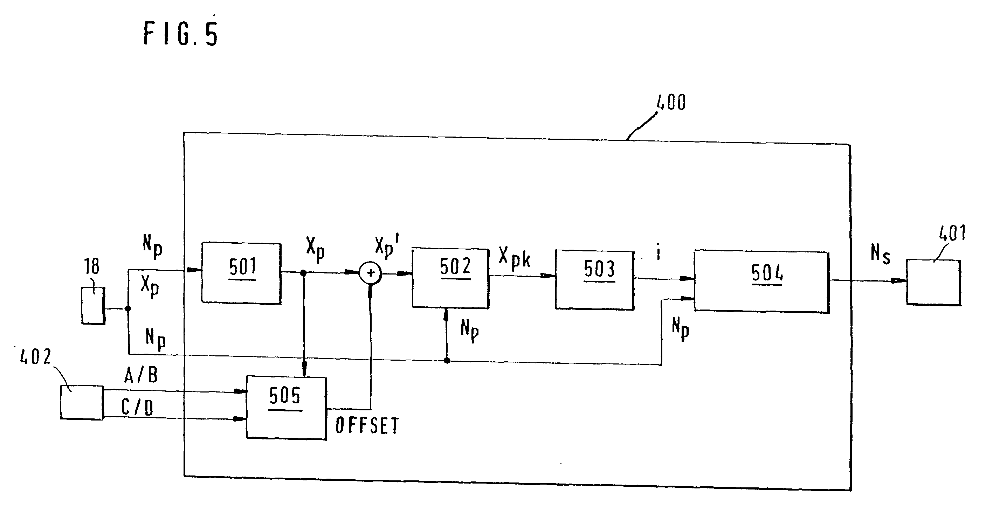

Anhand der Figur 5 soll aber zunächst der in der Figur 2 mit dem Bezugszeichen 400 gekennzeichnete Block näher beschrieben werden. Zunächst berechnet das Steuergerät 20 im Block 400 beziehungsweise im Block 501 aus dem Pulsweitenverhältnis des Ausgangssignals des Sensors 18 die axiale Verschiebung $X_p$ der Primärscheibe 25. Die axiale Verschiebung $X_p$ wird mit dem im Block 505 gebildeten Offsetwert OFFSET zu dem Wert $X_p'$ korrigiert. Wie noch näher anhand der Figur 3 beschrieben wird, werden hierzu dem Block 505 die Statussignale A/B und C/D vom Block 402 zugeführt.

In dem Block 502 wird die Primärdrehzahl $N_p$ mit einem vorgebbaren, kleinen Schwellwert verglichen. Abhängig von dem Vergleichsergebnis wird der Wert $X_{pk}$ ausgegeben. Wenn die Primärdrehzahl $N_p$ kleiner als der Schwellwert ist, dann wird die korrigierte axiale Verschiebung $X_p'$ auf einen festen Wert $X_{low}$ ($X_{pk}=X_{low}$) gesetzt, der der axialen Verschiebung der Anfahrübersetzung entspricht, ansonsten bleibt der Wert $X_p'$ unverändert ($X_{pk}=X_p'$). Durch die Funktionsweise des Blocks 502 ist gewährleistet, daß im Anfahrbereich (niedrige Motor- bzw. Primärdrehzahl $N_p$) immer die niedrigste Getriebeübersetzung eingestellt wird.

In dem Block 503 wird aus dem axialen Verschiebungswert $X_{pk}$ die Getriebeübersetzung i berechnet beziehungsweise ermittelt. Hierzu ist insbesondere eine Kennlinie vorgesehen.

Aus der so berechneten Übersetzung i und der Primärdrehzahl $N_p$ wird im Block 504 mit der Gleichung

$$N_s = N_p/i$$

die Sekundärdrehzahl $N_s$, das heißt die Drehzahl des abtriebsseitigen (sekundären) Kegelscheibensatz 8 berechnet, die wiederum ein Maß für die Fahrzeuglängsgeschwindigkeit ist. Die Sekundärdrehzahl $N_s$ wird dem Block 401 zugeführt.

Die genaue Bildung der Status- bzw. Zustandssignale A/B und C/D im Block 402 wird anhand der Figur 3 beschrieben. Hierzu wird dem Block 402 die momentan vorliegende Primärdrehzahl $N_p$ (Sensor 18) und der im noch anhand der Figur 2 zu beschreibenden Block 401 entsprechende Sollwert $N_{p, soll}$ zugeführt.

Der Block 402 bildet ein erstes Zustandssignal A/B, das entweder den Wert A oder den Wert B annehmen kann, und ein zweites Zustandssignal C/D, das entweder den Wert C oder D annehmen kann. Das erste Zustandssignal wird dann auf den Wert A gesetzt, wenn die momentane Primärdrehzahl Np kleiner als ein Schwellwert SW2 ist. Dies geschieht durch die Schwellwertspeicherung 40201 mittels des Vergleichs 40202.

Abhängig von dem Vergleich 40202 wird der Schalter 40204 derart umgelegt, daß der Signalwert A (40203) ausgangsseitig der zweiten Berechnungseinheit 402 anliegt.

Im Block 40205 wird die Differenz zwischen der momentanen Primärdrehzahl Np und der Sollprimärdrehzahl Np,soll gebildet und im Block 40207 mit dem Schwellwert SW3 (40206) verglichen. Unterschreitet die im Block 40205 gebildete Differenz den Schwellwert SW3, so wird der Schalter 40209 auf den Wert B (40208) umgelegt. Überschreitet gleichzeitig die momentane Primärdrehzahl Np den Schwellwert SW2 (vgl. 40202), so wird der Schalter 40204 wie in der Figur 2 zu sehen ist, mit dem Schalter 40209 verbunden. Wenn die Primärdrehzahl Np also größer ist als der Schwellwert SW2 und gleichzeitig die Differenz zwischen der Sollprimärdrehzahl Np,soll und der Primärdrehzahl Np kleiner als ein Schwellwert SW3 ist, dann wird das erste Zustandssignal auf den Wert B gesetzt.

Das zweite Zustandssignal wird auf den Wert C gesetzt, wenn die Primärdrehzahl Np größer ist als ein Schwellwert SW1 (40214). Hierzu dient der Schwellwertvergleich 40213 und der Schalter 40210 bzw. die Speicher 40211 und 40212. Überschreitet die Primärdrehzahl Np den Schwellwert SW1 nicht, wird das zweite Zustandssignal auf den Wert D gesetzt.

Beim Anfahren gelangt der Übersetzungsregler nacheinander in verschiedene Betriebsmodi. Beim Stillstand des Fahrzeugs ist der Übersetzungsregler in der Betriebsart "ratio-hold", das heißt, daß die am Block 505 (Fig.5) anliegenden Zustandssignale die Werte A und D aufweisen. Diese Betriebsart ist dadurch gekennzeichnet, daß das Primärventil 15 (Fig.1) geschlossen ist. Das bedeutet, daß kein Hydrauliköl in die Ölkammer 11 der Primärscheibe zufließen oder abfließen kann. Somit ändert sich die eingestellte Übersetzung nicht.

Wenn das Fahrzeug mit einer geringen Geschwindigkeit fährt, dann wird die Betriebsart "ratio-low" eingestellt. Die Zustandssignale am Block 505 (Fig.5) weisen dann die Werte A und C auf. In dieser Betriebsart gibt das Primärventil 15 einen kleinen Öffnungsquerschnitt zu dem Hydraulikreservoir frei. Das bedeutet, daß etwas Hydrauliköl aus der primärseitigen Kammer 11 abfließen kann.

Wenn das Fahrzeug weiter beschleunigt, dann gleichen sich Soll- und Istprimärdrehzahl ($N_{p,soll}$, $N_p$) an. Bei Gleichheit zwischen Soll- und Istprimärdrehzahl schaltet der Übersetzungsregler in die Betriebsart "Regelung", die Zustandssignale am Block 505 (Fig.5) weisen dann die Werte B und C auf. In dieser Betriebsart wird das Primärventil 15 wie anhand der noch zu beschreibenden Blöcke 403 und 404 gezeigt wird, abhängig von einem Vergleich zwischen der Soll- und Istprimärdrehzahl ($N_{p,soll}$, $N_p$) oder zwischen Soll- und Istaxialverschiebung ($X_{p,soll}$, $X_{pk}$) eingestellt.

Wenn die Betriebsart "ratio-low" aktiv ist, dann verstellt das Primärventil 15 demnach die Übersetzung hin zu größeren Werten, bis die durch mechanische Anschläge begrenzte maximal mögliche Übersetzung erreicht ist.

In diesem Fall (Erreichung der mechanischen Anschläge bei Betriebsart "ratio-low") wäre die Pulsweite des Ausgangssignals des Sensors 18 minimal. Da die axiale Verschiebung bei der größten Übersetzung bekannt ist, kann durch eine Anpassung des Korrekturwertes OFFSET eine Adaption des gemessenen Pulsweitensignals an die axiale Verschiebung vorgenommen werden. Dadurch lassen sich Toleranzen der Einbaulage des Sensors 18 beziehungsweise des Geberrades 27 (Hülse, Fig.7) während des laufenden Betriebs ausgleichen.

Die vorgestellte Adaption des Pulsweitensignals stellt nur eine Variante dar. Weitere Ausgestaltungen der Adaption sind im folgenden aufgezählt:

- Es kann eine Adaption des Korekturwertes OFFSET beim Ausrollen beziehungsweise beim Bremsen des Fahrzeugs durch eine Erkennung des mechanischen Endanschlags für die größte Übersetzung geschehen. Das Erreichen des mechanischen Endanschlags für die größte Übersetzung kann derart erkannt werden, daß die Übersetzung trotz eines in Richtung Tank geöffneten Primärventils 15 (Stellung A) nicht mehr größer wird.

- Das Erkennen des Endanschlags für die größte Übersetzung kann durch eine Messung des Hydraulikdrucks an der Primärseite geschehen. Wenn das Fahrzeug nicht steht und der Primärdruck Null ist, dann befindet sich das Getriebe am Endanschlag.

- Die Adaption des Korrekurwertes kann auch beim Fahren in der Overdrive-Übersetzung geschehen. Wenn das Fahrzeug ausrollt (Drosselklappenöffnung $\alpha$ hat kleinen Wert) und die Übersetzung nicht mehr weiter verkleinert werden kann, dann wird der Endanschlag für die Overdrive-Übersetzung erkannt.

- Das Erkennen des Endanschlags für die kleinste Übersetzung kann durch eine Messung des Hydraulikdrucks an der Primärseite geschehen. Wenn der Primärdruck maximal ist und/oder das Primärventil zur Pumpe 13 hin geöffnet ist (Stellung C) und die Übersetzung nicht mehr weiter verkleinert werden kann, dann wird der Endanschlag für die Overdrive-Übersetzung erkannt.

Die Figur 2 zeigt die nähere Ausgestaltung des gesamten Steuergeräts 20. Nach der anhand der Figur 5 beschriebenen Bearbeitung der Eingangssignale im Block 400 ist in dem Steuergerät 20 ein Block 401 vorhanden, welcher aus den Signalen Primärdrehzahl $N_p$ (Sensor 18) Sekundärdrehzahl $N_s$ (Ausgangssignal des Blocks 400), Fahrpedalstellung $\alpha$ (Sensor 21) und gegebenenfalls weiteren, nicht dargestellten Signalen zur Beeinflussung des Fahrprogramms eine Sollprimärdrehzahl $N_{p,soll}$ aufgrund eines Algorithmus berechnet oder anhand eines Kennfeldes ermittelt.

Die Sollprimärdrehzahl $N_{p,soll}$ wird neben der im Block 400 ermittelten Sekundärdrehzahl $N_s$ und der im Block 400 ermittelten axialen Verschiebung $X_{pk}$ dem anhand der Figur 4 beschriebenen Block 403 zugeführt.

Die Figur 4 zeigt die genauere Ausgestaltung des Blocks 403 des Übersetzungsreglers. Im Block 601 wird die Sollprimärdrehzahl $N_{p,soll}$ (aus Block 401) mit Hilfe der im Block 400 ermittelten Sekundärdrehzahl $N_s$ in eine gewünschte axiale Verschiebung $X_{p,soll}$ umgerechnet.

In dem Block 602 wird die gewünschte axiale Verschiebung $X_{p,soll}$ mit der gemessenen axialen Verschiebung $X_{p,k}$ verglichen und ein (vorläufiges) Stellsignal Ib für das Primärventil 15 gewonnen. Dazu werden die üblichen Algorithmen zur Positionsregelung von Hydraulikzylindern verwendet.

Bei bekannten Übersetzungsregelungen wird das Stellsignal des Primärventils 15 durch einen Vergleich der Soll- mit der Istprimärdrehzahl gewonnen. Dagegen wird bei der in der Figur 4 gezeigten Ausgestaltung als Sollgröße zunächst die Sollprimärdrehzahl $N_{p,soll}$ verwendet. Die eigentliche Regelung der Übersetzung durch die entsprechende Ansteuerung des Primärventils bezieht sich aber auf die Regelung der axialen Verschiebung. Dies hat folgenden Vorteil:

Bei Schwingungen des Antriebstrangs, die häufig bei kickdown Manövern (Fahrpedal wird weit niedergetreten) auftreten, kann es bei bekannten Übersetzungsregelungen (Stellsignal des Primärventils 15 abhängig von einem Vergleich der Soll- mit der Istprimärdrehzahl) zu einem kurzzeitigen Schwingen des Stellsignals für das Primärventil kommen. Bei der in der Figur 4 vorgeschlagenen Ausgestaltung kann die Schwingungsamplitude des Stellsignals deutlich reduziert werden.

Ein weiterer Vorteil besteht darin, daß der Schlupf des Umschlingungsmittels 9 (Schlupf zwischen Band und Primär- und/oder Sekundärscheiben) keinen Einfluß auf die Übersetzungsregelung hat, da hier nur die Primärdrehzahl eingeht. Die Übersetzungsregelung ist daher insgesamt unabhängiger von der im Antriebsstrang wirkenden Last.

Wie schon erwähnt kann alternativ zu der in der Figur 4 gezeigten vorteilhaften Ausführungsform aber auch der momentan vorliegende Primärdrehzahlwert Np (Sensor 18) dem Block 403 zugeführt werden. In diesem Fall ermittelt der Block 403 ein Ansteuersignal Ib zur Ansteuerung des Magneten 16 derart, daß nach einer vorgebbaren Strategie die momentane Primärdrehzahl Np an den entsprechenden Sollwert Np,soll herangeführt wird.

Bei der in der Figur 2 gezeigten Getriebesteuerung 20 wird das Ansteuersignal Ib in dem Block 404 erfindungsgemäß zu dem tatsächlichen Ansteuersignal I für das Primärventil beziehungsweise für den Magneten 16 weiterverarbeitet. Für diese Weiterverarbeitung werden dem Block 404 die Zustandssignale von dem schon anhand der Figur 3 beschriebenen Block 402 zugeführt, die den Signalwert A bzw. B und den Signalwert C bzw. D annehmen können.

Wie schon erwähnt wird die Sollprimärdrehzahl Np,soll zusammen mit der Istprimärdrehzahl Np in dem Block 403 (Figur 2) zu einem Stromwert Ib für die Ansteuerung des Magnetventils entsprechend einem bestimmten Öffnungsquerschnitt des Primärventils 15 berechnet. Der so berechnete Stromwert Ib wird zusammen mit dem ersten und zweiten Zustandssignal dem Block 404 zugeführt. Der Block 404 liefert das endgültige Ansteuerungssignal I für den Magneten 16 des Proportionalventils 15, d. h. es bestimmt die Stellung und damit den Öffnungsquerschnitt des Ventils 15.

Der Block 404 ist in der Figur 6 dargestellt. Wenn das erste Zustandssignal den Wert A aufweist und das zweite Zustandssignal den Wert D, dann wird das Stromsignal I auf einen Wert I1 (4045) gesetzt, bei dem das Proportionalventil 15 geschlossen ist. In diesem Fall bleibt die momentan eingestellte Übersetzung konstant. Das Setzen des Stromsignals auf den Wert I1 geschieht durch eine entsprechende Ansteuerung der Schalter 4047 und 4046. Dies bedeutet, daß keine Änderung der Getriebeübersetzung dann stattfindet, wenn die momentane Primärdrehzahl sowohl den Schwellwert SW1 als auch den Schwellwert SW2 unterschreitet.

Wenn das erste Zustandssignal den Wert A aufweist und das zweite Zustandssignal den Wert C, dann wird das vom Block 403 kommende Signal Ib auf einen einstellbaren minimalen Wert (4042) bzw. einen einstellbaren maximalen Wert (4041) begrenzt. Diese Begrenzung geschieht durch die Maximal- bzw. Minimalauswahl 4043 und 4044. D. h. daß in dem Fall, in dem

- die Primärdrehzahl größer als der Schwellwert SW1 und kleiner als der Schwellwert SW2 ist oder
- die Primärdrehzahl größer als der Schwellwert SW1 und die Differenz zwischen Sollprimärdrehzahl und Primärdrehzahl größer als der Schwellwert SW3 ist,

die Übersetzung mit eingeschränkter Geschwindigkeit verändert wird.

Wenn das erste Zustandssignal den Wert B aufweist, dann wird das vom Block 403 kommenden Stromsignal Ib nicht begrenzt, was mittels Umlegen des Schalters 4047 erreicht wird. D. h. in dem Fall, in dem die Primärdrehzahl den Schwellwert SW2 überschreitet, die Differenz zwischen dem Sollwert Np,soll und dem Istwert Np der Primärdrehzahl nicht zu groß ist, wird die Getriebeübersetzung schnell verstellt.

Das Steuergerät 20 besitzt selbstverständlich eine Einrichtung zur Einstellung des Stroms durch das Ventil 16 entsprechend dem gewünschten Strom I.

Während die dargestellte Ausführungsform von der gemeinsamen Erfassung der axialen Verschiebung und der Drehzahl an der Antriebseite des Getriebes ausgeht, kann auch vorgesehen sein, diese gemeinsame Erfassung an der Abtriebsseite vorzunehmen. Die Weiterverarbeitung zu dem Ansteuersignal für die Übersetzungsverstellung geschieht dann analog.

Die berechneten Werte für die Übersetzung i (Block 503) und die Sekundärdrehzahl $N_s$ (Block 504) können darüber hinaus auch für andere Getriebesteuerungsfunktionen wie beispielsweise für die an sich bekannte Regelung der Bandspannung verwendet werden.

Werden die axiale Verschiebung und die Primärdrehzahl gemeinsam erfaßt, so ergibt sich gegenüber der Berechnung der Übersetzung aus der Primär- und der Sekundärdrehzahl der Vorteil, daß die Übersetzung bereits bei sehr geringen Fahrzeuggeschwindigkeiten gemessen werden kann, da sich in der Anfahrübersetzung die Primärscheiben schneller drehen als die Sekundärscheiben. Die genauere Messung der Drehzahl wird bekanntlich mit geringer werdender Drehzahl schwieriger.

Darüber hinaus muß ein Sekundärdrehzahlsensor einen sehr großen Meßbereich, beispielsweise bis ca. 12000 Umdrehungen pro Minute, abdecken. Dagegen muß der Primärdrehzahlsensor im allgemeinen nur einen Meßbereich bis ca. 6000 Umdrehungen pro Minute erfassen. Insbesondere beim Anfahren und Bremsen des Fahrzeugs ergeben sich durch das vorgeschlagene Meßprinzip Vorteile, da die Verstellung der Übersetzung schon bei kleineren Getriebeübersetzungen exakt möglich wird.

Zusammenfassend sind die Vorteile der Erfindung aufgeführt:

- Es wird nur ein einziger Sensor für die Erfassung der Primär- oder Sekundärdrehzahl benötigt. Der im Stand der Technik verwendete zweite Drehzahlsensor kann entfallen.
- Die Übersetzungsbestimmung ist bei geringen Fahrzeuggeschwindigkeiten genauer als im Stand der Technik.
- Die Toleranzen bei der Messung der axialen Verschiebung werden durch verschiedene Adaptionsmöglichkeiten ausgeglichen.
- Die Übersetzungseinstellung ist weitgehend unabhängig von dem Bandschlupf und damit von Momentenschwankungen im Antriebsstrang, die Übersetzungseinstellung ist damit weitgehend lastunabhängig.

**Patentansprüche**

1. Vorrichtung zur Verstellung der Übersetzung eines in seiner Übersetzung stufenlos verstellbaren Umschlingungsgetriebes mit einer Antriebs- und einer Abtriebsseite (7, 8), die wenigstens ein axial verschiebbares (25, 26) Element aufweisen, das im wesentlichen die Form einer Kegelscheibe besitzt, bei dem Sensormittel (18) zur Erfassung eines die Drehbewegung der Antriebsseite oder der Abtriebsseite repräsentierenden Drehzahlsignals (Np) und zur Erfassung eines die axiale Verschiebung wenigstens eines der axial verschiebbaren Elemente repräsentierenden Verschiebungssignals (Xp) und Mittel (20) zur Verstellung der Übersetzung vorgesehen sind, mittels der die Verstellung wenigstens abhängig von dem erfaßten Verschiebungssignal (Xp) geschieht, **dadurch gekennzeichnet, daß** die Mittel (20) zur Verstellung der Übersetzung derart ausgebildet sind, daß

   - abhängig von einem bei Vorliegen eines vorgebbaren Zustands des Getriebes erfaßten Verschiebungssignal ein Korrekturwert (OFFSET) ermittelt, und
   - das erfaßte Verschiebungssignal (Xp) und/oder die aus dem erfaßten Verschiebungssignal abgeleiteten Größen (Xp') abhängig von dem ermittelten Korrekturwert (OFFSET) modifiziert werden.

2. Vorrichtung nach Anspruch 1, **dadurch gekennzeichnet, daß** der vorgebbare Zustand dann als vorliegend erkannt wird, wenn erfaßt wird, daß das Getriebe seine maximale oder minimale Übersetzung einnimmt, wobei insbesondere vorgesehen ist, daß

   - zur hydraulischen Verschiebung der axial verschiebbaren Elemente wenigstens ein Ventil (15) betätigt wird und die Erfassung (505) der maximalen oder minimalen Übersetzung abhängig von der Betätigung des wenigstens einen Ventils und/oder abhängig von dem erfaßten Hydraulikdruck geschieht, und/oder
   - die Erfassung der maximalen oder minimalen Übersetzung abhängig von der zeitlichen Änderung des erfaßten Verschiebungssignals geschieht, und/oder
   - die Erfassung der maximalen oder minimalen Übersetzung abhängig von der erfaßten Stellung des vom Fahrer betätigbaren Fahrpedals geschieht.

3. Vorrichtung nach Anspruch 1, **dadurch gekennzeichnet, daß** die Mittel (20) zur Verstellung der Übersetzung derart ausgebildet sind, daß

   - die Verstellung abhängig von dem erfaßten Drehzahlsignal (Np), das die Drehbewegung der Antriebsseite repräsentiert, und abhängig von dem erfaßtem Verschiebungssignal (Xp), das die axiale Verschiebung eines der auf der Antriebseite angeordneten axial verschiebbaren Elemente repräsentiert, geschieht, wobei insbesondere vorgesehen ist, daß die Verstellung der Übersetzung ohne Berücksichtigung einer sensorisch direkt erfaßten Drehbewegung der Abtriebsseite geschieht oder

- die Verstellung abhängig von dem erfaßten Drehzahlsignal, das die Drehbewegung der Abtriebsseite repräsentiert, und abhängig von dem erfaßten Verschiebungssignal, das die axiale Verschiebung eines der auf der Abtriebseite angeordneten axial verschiebbaren Elemente repräsentiert, geschieht, wobei insbesondere vorgesehen ist, daß die Verstellung der Übersetzung ohne Berücksichtigung einer sensorisch direkt erfaßten Drehbewegung der Antriebsseite geschieht.

**4.** Vorrichtung nach Anspruch 1, **dadurch gekennzeichnet, daß** die Sensormittel derart ausgelegt sind, daß zur Erfassung der Drehbewegung und zur Erfassung der axialen Verschiebung das Ausgangssignal (Np/Xp) eines einzigen Sensors (18) ausgewertet wird.

**5.** Vorrichtung nach Anspruch 1, **dadurch gekennzeichnet, daß** die Mittel (20) zur Verstellung der Übersetzung derart ausgebildet sind, daß

- abhängig von dem erfaßten Drehzahlsignal (Np), das die Drehbewegung der Antriebsseite repräsentiert, und dem erfaßten Verschiebungssignal (Xp), das die axiale Verschiebung eines der auf der Antriebseite angeordneten axial verschiebbaren Elemente repräsentiert, die Drehbewegung der Abtriebseite und/oder die aktuelle Getriebeübersetzung (i) oder
- abhängig von dem erfaßten Drehzahlsignal, das die Drehbewegung der Abtriebsseite repräsentiert, und dem erfaßten Verschiebungssignal, das die axiale Verschiebung eines der auf der Abtriebseite angeordneten axial verschiebbaren Elemente repräsentiert, die Drehbewegung der Antriebseite und/oder die aktuelle Getriebeübersetzung (i)

ermittelt wird

**6.** Vorrichtung nach Anspruch 1, **dadurch gekennzeichnet, daß** die Mittel (20) zur Verstellung der Übersetzung derart ausgebildet sind, daß die Verstellung der Übersetzung durch eine Regelung der Verschiebung der axial verschiebbaren Elemente auf einen ermittelten Sollwert (Xp,soll) geschieht, wobei insbesondere vorgesehen ist, daß der Sollwert abhängig von dem erfaßten Verschiebungssignal (Xp) und abhängig von der erfaßten Drehbewegung (Np) ermittelt wird.

**7.** Vorrichtung nach Anspruch 1, **dadurch gekennzeichnet, daß** die Mittel (20) zur Verstellung der Übersetzung derart ausgebildet sind, daß die Verstellung der Übersetzung durch eine Regelung der Verschiebung der axial verschiebbaren Elemente auf einen ermittelten Sollwert (Xp,soll) geschieht, wobei

- aus dem erfaßten Verschiebungssignal (Xp) der Antriebsseite und dem erfaßten Drehzahlsignal (Np) der Antriebsseite die Drehbewegung (Ns) der Abtriebsseite ermittelt wird,
- aus dem erfaßten Drehzahlsignal (Np) der Antriebsseite, der ermittelten Drehbewegung (Ns) der Abtriebsseite und der erfaßten Stellung (α) des vom Fahrer betätigbaren Fahrpedals ein Sollwert (Np,soll) für die Drehbewegung der Antriebsseite gebildet wird und
- abhängig von dem ermittelten Sollwert (Np, soll) für die Drehbewegung der Antriebsseite und dem erfaßten Drehzahlsignal (Np) der Antriebsseite ein Sollwert (Xp,soll) für die Verschiebung der axial verschiebbaren Elemente ermittelt wird.

**8.** Verfahren zur Verstellung der Übersetzung eines in seiner Übersetzung stufenlos verstellbaren Umschlingungsgetriebes mit einer Antriebs- und einer Abtriebsseite (7, 8), die wenigstens ein axial verschiebbares (25, 26) Element aufweisen, das im wesentlichen die Form einer Kegelscheibe besitzt, bei dem ein die Drehbewegung der Antriebsseite oder der Abtriebsseite repräsentierendes Drehzahlsignal (Np) und ein die axiale Verschiebung wenigstens eines der axial verschiebbaren Elemente repräsentierende Verschiebungssignal (Xp) erfaßt wird und die Verstellung wenigstens abhängig von dem erfaßten Verschiebungssignal (Xp) geschieht, **dadurch gekennzeichnet, daß**

- abhängig von einem bei Vorliegen eines vorgebbaren Zustands des Getriebes erfaßten Verschiebungssignal ein Korrekturwert (OFFSET) ermittelt, und
- das erfaßte Verschiebungssignal (Xp) und/oder die aus dem erfaßten Verschiebungssignal abgeleiteten Größen (Xp') abhängig von dem ermittelten Korrekturwert (OFFSET) modifiziert werden.

**Claims**

**1.** Device for adjusting the transmission ratio of a continuously variable transmission flexible drive mechanism with a drive side and an output side (7, 8) which have at least one axially displaceable element (25, 26) which has essentially the form of a conical disc and in which sensor means (18) for sensing a rotational speed signal (Np) representing the rotational movement of the drive side or of the output side and for sensing a displacement signal (Xp) representing the axial displacement of at least one of the axially displaceable elements, and means (20) for adjusting the transmission ratio, by means of which the adjustment is carried out at least as a function of the sensed displacement signal (Xp), are provided, **characterized in that** the means (20) for adjusting the transmission ratio are embodied in such a way that

- a correction value (OFFSET) is determined as a function of a displacement signal which is sensed when a predefinable state of the drive mechanism is present, and
- the sensed displacement signal (Xp) and/or the variables (Xp') which are derived from the sensed displacement signal is/are modified as a function of the correction value (OFFSET) which is determined.

2. Device according to Claim 1, **characterized in that** the predefinable state is detected as being present if it is sensed that the drive mechanism assumes its maximum or minimum transmission ratio, it being provided, in particular, that

- at least one valve (15) is activated in order to hydraulically displace the axially displaceable elements, and the sensing (505) of the maximum or minimum transmission ratio takes place as a function of the activation of the at least one valve and/or as a function of the sensed hydraulic pressure, and/or
- the sensing of the maximum or minimum transmission ratio takes place as a function of the change in the sensed displacement signal over time, and/or
- the sensing of the maximum or minimum transmission ratio takes place as a function of the sensed position of the accelerator pedal which can be activated by the driver.

3. Device according to Claim 1, **characterized in that** the means (20) for adjusting the transmission ratio are embodied in such a way that

- the adjustment takes place as a function of the sensed rotational speed signal (Np) which represents the rotational movement of the drive side, and as a function of the sensed displacement signal (Xp) which represents the axial displacement of one of the axially displaceable elements which are arranged on the drive side, it being provided in particular that the adjustment of the transmission ratio takes place without taking into account a rotational movement, sensed directly by sensor means, of the output side, or
- the adjustment takes place as a function of the sensed rotational speed signal which represents the rotational movement of the output side, and as a function of the sensed displacement signal which represents the axial displacement of one of the axially displaceable elements arranged on the output side, it being provided in particular that the adjustment of the transmission ratio takes place without taking into account a rotational movement, sensed directly by sensor means, of the drive side.

4. Device according to Claim 1, **characterized in that** the sensor means are configured in such a way that the output signal (Np/Xp) of a single sensor (18) is evaluated in order to sense the rotational movement and in order to sense the axial displacement.

5. Device according to Claim 1, **characterized in that** the means (20) for adjusting the transmission ratio are embodied in such a way that

- the rotational movement of the output side and/ or the current drive-mechanism transmission ratio (i) are/is determined as a function of the sensed rotational speed signal (Np) which represents the rotational movement of the drive side and the sensed displacement signal (Xp) which represents the axial displacement of one of the axially displaceable elements which are arranged on the drive side, or
- the rotational movement of the drive side and/ or the current drive-mechanism transmission ratio (i) are/is determined as a function of the sensed rotational speed signal which represents the rotational movement of the output side, and the sensed displacement signal which represents the axial displacement of one of the axially displaceable elements arranged on the output side.

6. Device according to Claim 1, **characterized in that** the means (20) for adjusting the transmission ratio are embodied in such a way that the adjustment of the transmission ratio is carried out by adjusting the displacement of the axially displaceable elements to a setpoint value (Xp, setp) which is determined, it being provided in particular that the setpoint value is determined as a function of the sensed displacement signal (Xp) and as a function of the sensed rotational movement (Np).

7. Device according to Claim 1, **characterized in that** the means (20) for adjusting the transmission ratio are embodied in such a way that the adjustment of the transmission ratio is carried out by adjusting the displacement of the axially displaceable elements to a setpoint value (Xp, setp) which is determined,

- the rotational movement (Ns) of the output side being determined from the sensed displacement signal (Xp) of the drive side and the sensed rotational speed signal (Np) of the drive side,
- a setpoint value (Np, setp) for the rotational movement of the drive side being formed from the sensed rotational speed signal (Np) of the drive side, the rotational movement (Ns) of the output side which is determined and the sensed position ($\alpha$) of the accelerator pedal which can be activated by the driver, and
- a setpoint value (Xp, setp) for the displacement of the axially displaceable elements being determined as a function of the setpoint value (Np, setp) which is determined for the rotational movement of the drive side and the sensed rotational speed signal (Np) of the drive side.

8. Method for adjusting the transmission ratio of a continuously variable transmission flexible drive mechanism with a drive side and an output side (7, 8) which have at least one axially displaceable element (25, 26) which has essentially the form of a conical disc, in which a rotational speed signal (Np) representing the rotational movement of the drive side or of the output side and a displacement signal (Xp) representing the axial displacement of at least one of the axially displaceable elements are sensed, and the adjustment is carried out at least as a function of the sensed displacement signal (Xp), **characterized in that**

- a correction value (OFFSET) is determined as a function of a displacement signal which is sensed when a predefinable state of the drive mechanism is present, and
- the sensed displacement signal (Xp) and/or the variables (Xp') which are derived from the sensed displacement signal is/are modified as a function of the correction value (OFFSET) which is determined.

**Revendications**

1. Dispositif de réglage du rapport de transmission d'une transmission à enveloppement dont le rapport de transmission est réglable en continu, comportant un côté moteur et un côté entraîné (7, 8), ayant au moins un élément coulissant axialement (25, 26) ayant essentiellement la forme d'une poulie conique, ainsi que des capteurs (18) destinés à détecter un signal de vitesse de rotation ($N_P$) représentant le mouvement de rotation du côté moteur ou du côté entraîné et pour détecter un signal de coulissement ($X_P$) représentant le coulissement axial d'au moins un élément coulissant axialement, et des moyens (20) pour régler le rapport de transmission, à l'aide desquels on effectue le réglage au moins en fonction du signal de coulissement détecté ($X_P$),
**caractérisé en ce que**
les moyens (20) de réglage du rapport de transmission sont réalisés de façon qu':

- en fonction d'un signal de coulissement détecté pour un état prédéterminé de la transmission, on détermine une valeur de correction (OFFSET) ; et
- on modifie le signal de coulissement détecté ($X_P$) et/ou les grandeurs ($X_{P'}$) déduites du signal de coulissement détecté en fonction de la valeur de correction déterminée OFFSET.

2. Dispositif selon la revendication 1,
**caractérisé en ce qu'**
on estime que l'état prédéterminé est présent si la transmission prend son rapport de transmission maximum ou minimum et il est notamment prévu que :

- pour le coulissement hydraulique des éléments coulissant axialement, on actionne au moins une soupape (15) et la saisie (505) de la transmission maximale ou minimale se fait en fonction de l'actionnement d'au moins une soupape et/ou en fonction de la pression hydraulique détectée ; et/ou
- la saisie du rapport de transmission maximum ou minimum se fait en fonction de la variation dans le temps du signal de coulissement détecté ; et/ou
- la saisie du rapport de transmission maximum ou minimum se fait en fonction de la position détectée de la pédale d'accélérateur actionnée par le conducteur.

3. Dispositif selon la revendication 1,
**caractérisé en ce que**
les moyens (20) pour régler le rapport de transmission sont réalisés de façon que :

- le réglage se fait en fonction du signal de vitesse de rotation détecté ($N_P$) qui représente le mouvement de rotation du côté moteur et en fonction du signal de coulissement ($X_P$), détecté qui représente le coulissement axial d'un élément coulissant axialement, prévu du côté entraîné ;
- il est notamment prévu que le réglage du rapport de transmission se fait sans tenir compte d'un mouvement de rotation du côté d'entraînement, mouvement saisi directement par un capteur ; ou

- le réglage se fait en fonction du signal de vitesse de rotation détecté représentant le mouvement de rotation du côté entraîné et en fonction du signal de coulissement détecté représentant le coulissement axial d'un élément coulissant axialement du côté entraîné ; et
- il est notamment prévu que le réglage du rapport de transmission se fait sans tenir compte d'un mouvement de rotation saisi directement par capteur du côté moteur.

4. Dispositif selon la revendication 1, **caractérisé en ce que** les capteurs sont conçus pour saisir le mouvement de rotation et le coulissement axial du signal de sortie ($N_P/X_P$) d'un unique capteur (18).

5. Dispositif selon la revendication 1, **caractérisé en ce que** les moyens (20) pour régler le rapport de transmission sont réalisés de façon que :

- en fonction du signal de vitesse de rotation détecté ($N_P$), qui représente le mouvement de rotation du côté moteur et du signal de coulissement détecté ($X_P$), qui représente le coulissement axial d'un élément coulissant axialement du côté moteur, on détermine le mouvement de rotation du côté entraîné et/ou le rapport de transmission actuel (i) ; ou
- en fonction du signal de vitesse de rotation détecté et représentant le mouvement de rotation du côté entraîné et du signal de coulissement détecté représentant le coulissement axial de l'un des éléments coulissant axialement du côté entraîné, on détermine le mouvement de rotation du côté entraîné et/ou le rapport de transmission actuel (i)

6. Dispositif selon la revendication 1, **caractérisé en ce que** les moyens (20) pour régler le rapport de transmission sont réalisés de façon que le réglage du rapport de transmission se fasse par une régulation du coulissement des éléments coulissants axialement sur une valeur de consigne déterminée ($X_{p,CONS}$), et il est notamment prévu de déterminer la valeur de consigne en fonction du signal de coulissement détecté ($X_p$) et en fonction du mouvement de rotation détecté (NP).

7. Dispositif selon la revendication 1, **caractérisé en ce que**

- les moyens (20) pour régler le rapport de transmission sont réalisés pour que le réglage du rapport de transmission se fasse par une régulation du coulissement des éléments coulissant axialement sur une valeur de consigne déterminée ($X_{p,CONS}$) ; et

- à partir du signal de coulissement détecté ($X_p$) du côté moteur et du signal de vitesse de rotation détecté ($N_p$) du côté moteur on détermine le mouvement de rotation ($N_s$) du côté entraîné ;
- à partir du signal de vitesse de rotation détecté ($N_p$) du côté moteur, du mouvement de rotation déterminé ($N_s$) du côté entraîné et la position détectée ($\alpha$) de la pédale d'accélérateur actionnée par le conducteur, on forme une valeur de consigne ($N_{p,CONS}$) pour le mouvement de rotation du côté moteur ; et
- en fonction de la valeur de consigne déterminée ($N_{p,CONS}$) du mouvement de rotation du côté moteur et du signal de vitesse de rotation détecté ($N_p$) du côté moteur on détermine une valeur de consigne ($X_p$, CONS), pour le coulissement des éléments coulissants axialement.

8. Procédé de réglage du rapport de transmission d'une transmission à courroie réglable en continu, comportant un côté moteur et un côté entraîné (7, 8), ayant au moins un élément coulissant axialement (25, 26) qui possède essentiellement la forme d'une poulie conique, selon lequel on détecte un signal de vitesse de rotation ($N_p$) représentant le mouvement de rotation du côté moteur ou du côté entraîné et un signal de coulissement ($X_p$) représentant le coulissement axial d'au moins l'un des éléments coulissant axialement et on effectue le réglage au moins en fonction du signal de coulissement détecté (Xp), **caractérisé en ce qu'**

- en fonction d'un signal de coulissement détecté dans le cas d'un état prédéterminé de la transmission, on forme une valeur de correction (offset) ; et
- on modifie le signal de coulissement ($X_p$), détecté et/ou les grandeurs ($X_p'$) déduites du signal de coulissement détecté en fonction de la valeur de correction obtenue (OFFSET).

FIG.1

EP 0 929 409 B1

FIG. 2

FIG.3

FIG. 4

FIG.5

EP 0 929 409 B1

## FIG.6

## FIG.7